# EUROPEAN PATENT APPLICATION

(11) **EP 1 193 490 A1**
(43) Date of publication of application: **03.04.2002**
(21) Application number: 00121238.0
(22) Date of filing: 02.10.2000
(51) Int. Cl.: G01N 21/952, B23K 9/095, G01N 21/55

(54) **Method for weld seam testing and device therefore**

(71) Applicant: AEA Technology QSA GmbH, 38110 Braunschweig (DE)
(72) Inventor: Fritz, Eberthard, Dr., 38110 Braunschweig (DE); Phillipps, Gerd, Dr., 14169 Berlin (DE)
(74) Representative: Schwabe - Sandmair - Marx

(57) **Abstract**

The present invention relates to a method for weld seam testing of a weld seam joining two metallic parts, said method comprising the steps of: providing two laser beams, directing the first laser beam on a first predetermined position on the first metallic part and directing the second laser beam on a second predetermined position on the second metallic part, and detecting the reflected light of the laser beams along the weld seam.

The invention further relates to an apparatus for weld seam testing of a laser weld seam joining a metallic container or tube and a metallic cap, said apparatus comprising: two laser beam emitting devices or a scanning laser beam emitting device, a means for positioning of the container or tube and the cap in a position such that the first laser beam is directed on a first predetermined position on the cap and the second laser beam is directed on a second predetermined position on the container or tube or that the scanning laser beam scans the first and the second predetermined position, and optionally stopping means, a means for moving the container or tube and cap so as to allow for irradiation of the laser beam(s) along weld seam, and a detector for detecting the reflected light of the laser beam(s) along the weld seam.

## Description

### Field of the Invention

The present invention relates to a method for weld seam testing and an apparatus therefore. Especially, the present invention relates to a method for weld seam testing of a weld seam joining two metallic parts, and more in detail for testing of a weld seam joining a metallic tube or container and a cap therefore.

### Background of the Invention

Welding as a method for joining two metallic parts is a technique widely used throughout the industry, such as automobile industry, apparatus construction as well as aircraft industry. Welding can, however, also be used for sealing of containers by joining the container and its cap or closure.

One welding technique gaining specific interest is laser welding, since the energy density of this welding process can be varied in a wide range, thereby enabling a minimum heat input and thus minimum deformation of the welded parts. Further, the components can be welded with a high feed rate, avoiding a significant distortion of the material at a favorable through put. In addition laser welding provides the advantages that the laser beam can be precisely focused to the spot of the weld seam within dimensions in the mm-range or even µm-range. Therefore, laser welding is the method of choice when going into small such as µm dimensions, e.g. in electrical engineering.

Industry often puts high demands on the quality of the welded joints, which are therefore tested as to their quality. For doing so non-destructive test methods are essential. Such non-destructive test methods at present include ultrasonic examination, x-ray testing or electron beam micro analysis. Each of these methods is well known in the art.

For example, European Patent Application 0 582 492 discloses a process and an apparatus using for weld seam testing, using ultrasonic signals to control the contact between two metallic sheets before laser welding. According to the process disclosed in said document, the ultrasonic signals cross the entire joining area, an evaluation being made on the change of intensity of the ultrasonic signal.

Likewise Brit. J. of Non-Destr. Test., 1993, p. 57-64, discloses a method for on-line weld monitoring using ultrasonic signals.

WO 99/44784 discloses a process for weld seam testing of a laser weld in form of a butt joined. According to this document the weld seam is continuously scanned by distance measuring instruments.

Another method of weld seam testing is disclosed in DE 197 44 104 relating to testing by measuring tension and expansion of and between the welded pieces. The method requires special sample holders and equipment.

The above non-destructive weld seam testing methods all require a complicated apparatus and additional handling of the test pieces. This becomes, however, increasingly difficult with decreasing dimensions of the joined metallic pieces and the weld seem to be tested. It is further counter productive for on-line monitoring of the weld seam in a production line and to simple automatisation of the process due to the extra handling steps required.

Such small dimension may, for example, occur in manufacture of small medical devices. A specific class of such devices are radiation sources for brachytherapy (the so-called "seeds") where the weld seam and the parts joined thereby have dimensions in the mm- and/or even µm-range. A typical casing of a radiation source for use in brachytherapy is, for example, disclosed in EP-Application 99 111 100.6 of AEA Technology QSA GmbH, which is incorporated by reference herein. According to this document the radiation source is provided in dimensions suitable for being delivered in a catheter to the selected site to be treated within the vascular system of a patient. This results in dimensions of the casing of below 1.5 mm diameter and about 2 to 10 mm length. Within this casing there is provided a radioactive insert. These very small dimensions are common to medical radiation sources and require special techniques for handling and manufacture of the same.

First of all, in these dimensions it is difficult to optically check quality of a weld joint or weld seam. Therefore, it would be highly appreciable to have a method which simply and efficiently allows for testing reliable formation of the weld seam and fixing of the parts without unnecessary handling of the very small devices.

In addition, such weld seams also form potential weak spots with respect to release of the radioactive material sealingly enclosed in the casing. To minimize the risk of radioactive contamination it is thus further desirable to test leak tightness of the casing i.e. the seam, both to avoid contamination of batches of seeds produced and, of course, to avoid contamination of the patient receiving treatment with such seeds. More in detail, since the seeds may not only be applied by way of a catheter but may also be implanted into a human body and therefore come in close contact with body fluids, these fluids will wash out the radioactive material from the inside of the seed, in case not leaktight seal or enclosure is formed.

Conventional methods for testing leaktightness of a sealing involve measuring the electric conductivity of the joint between the container and its cap, measuring the intensity of released radiation or a helium leak test. Measuring of electric conductivity of metallic casings has the drawback that minor leaks may not be detected and that no information on the strength of the weld seam can be obtained. It further requires application of electrodes and special measuring equipment.

Measuring of released radiation bears the disadvantage that, although even minor leaks may be detected, the method does not allow for detecting or controlling penetration depth of a weld seam, i.e. the seam's strength, when welding does not penetrate deeply enough to prevent later breaking apart of the welded pieces. Likewise, the helium leak test is inconvenient in that it results in contamination of the test chamber and test equipment once the leak is detected. If not applied in situ to avoid this contamination, the He leak test requires additional equipment (separate testing chamber) and of course additional manipulation of the tiny radiation source.

In view of the above drawbacks, it is the object of the invention to provide a method for weld seam testing of a weld seam joining two metallic parts, especially metallic parts having small dimensions in the mm- or µm-range. This test method should be non destructive, should be easily automated and generate reproducible results even if applied to small dimensions.

It is further an object of the present invention to provide a method for testing leaktightness of a weld seam. The method should especially be applicable on testing of weld seams of casings for medical applications such as radiation sources, the weld seam and the parts joined having a width in the mm- and/or µm-range.

### Summary of the Invention

These and other objects are solved and the disadvantages and drawbacks of the prior art are overcome by the method and apparatus of the invention.

In a first aspect the present invention therefore relates to a method for weld seam testing of a weld seam joining two metallic parts, said method comprising the steps of:
a) providing two laser beams,
b) directing the first laser beam on a first predetermined position on the first metallic part and directing the second laser beam on a second predetermined position on the second metallic part, and
c) detecting the reflected light of the laser beams along the weld seam.

In a preferred embodiment the two laser beams are replaced by a scanning laser beam.

In a second aspect the present invention relates to an apparatus for weld seam testing of a laser weld seam joining a metallic container or tube and a metallic cap, said apparatus comprising:
a) two laser beam emitting devices or a scanning laser beam emitting device,
b) a means for positioning of the container or tube and the cap in a position such that the first laser beam is directed on a first predetermined position on the cap and the second laser beam is directed on a second predetermined position on the container or tube or that the scanning laser beam scans the first and the second predetermined position, and optionally stopping means,
c) a means for moving the container or tube and cap so as to allow for irradiation of the laser beam(s) along weld seam, and
d) a detector for detecting the reflected light of the laser beam(s) along the weld seam.

### Brief Description of the Drawings

Fig. 1A to 1D are schematic drawings illustrating the method of the invention.
Fig. 2A to 2F are schematic drawings illustrating three different arrangements of incident laser beams, reflected beams and detectors according to the method of the invention.
Fig. 3 is a schematic drawing of a preferred embodiment of the device according to the invention. Throughout the figures like numbers refer to like parts.

### Detailed Description of the Invention

The present invention relates to a method for weld seam testing of a weld seam joining two metallic parts, said method comprising the steps of:
a) providing two laser beams,
b) directing the first laser beam on a first predetermined position on the first metallic part and directing the second laser beam on a second predetermined position on the second metallic part, and
c) detecting the reflected light of the laser beams along the weld seam.

The weld seam to be tested according to the method of the invention joins two metallic parts. The metallic parts can in general be of any desired shape and dimensions provided these shapes and dimensions allow for joining of the two parts together by welding. The two metallic parts can, for example, be in form of flat sheets, rods, sticks, wires, tubes, plates and so on.

According to a preferred embodiment, one of the metallic parts is a tube or container, the other one being an end cap or closure therefore, preferably in form a flat plate. In general the cap may, however, have any suitable form, see for example EP-Application 99 111 099.6, which is incorporated by reference herein.

In a more preferred embodiment the container or tube has a rotationally symmetric, preferably circular opening and the cap is a plate of the same shape as the opening, having a diameter matching the outer diameter of the opening walls.

In a more preferred embodiment the opening of the tube or container is coextensive with the internal cross section of the container or tube in a plane orthogonal to its longitudinal axis. In this case the opening walls are identical to the container or tube walls.

In a most preferred embodiment, the container or tube is a hollow cylindrical body of circular cross section and the cap is a circular flat plate having the same outer diameter as the container or tube. The container may be obtained from the tube by first welding a first flat plate as an end cap to its first end, thereby forming the container. This container may then be closed by fixing through welding a second plate as a second endcaps on its second end.

In general the metallic parts to be joined by the weld seam to be tested according to the invention may have any dimensions as desired. Thus, the weld seam to be tested may according to the dimensions and thickness of the parts to be joined have dimensions in the range of cm to µm.

More preferably, the weld seam to be tested with the method according to the invention has very small dimensions due to the metallic parts to be joined having small dimensions themselves. Thus, the weld seam preferably has dimensions in the µm-range. In these dimensions the method for weld seam testing of the invention provides for special benefits due to use of a laser for weld seam testing, since the laser allows for very precise spot monitoring in non-destructive manner.

In view of the above-preferred embodiment of the container or tube, the opening of the container or tube preferably has an outer diameter of 1.5 mm or less, preferably 0.8 mm or less, and has a wall thickness of 20 to 100 µm. Even more preferably, in cases where the opening is coextensive with the internal cross section of the container or tube, the container or tube is a hollow cylinder having an outer diameter of 1.5 mm or less, preferably 0.8 mm or less, a wall thickness of 20 to 100 µm, preferably 30 to 100 µm, and has a length of 1.0 to 15.0 mm, preferably 2.0 to 10.0 mm. In case of a container, this container is preferably provided on one of the cylinder ends with a cap in form of a flat circular plate having a thickness of 20 to 100 µm, preferably 40 to 60 µm, and a diameter of 1.5 mm or less, which diameter matches the outer diameter of the cylinder. The container may be sealingly closed by a second cap of the same dimensions and shape.

The above dimensions are in the microscopic range and no longer allow for visual control of presence of the weld seam joining these parts. Such small dimensions are, however, required for containers or casings of brachytherapy devices to allow for introduction of these brachytherapy devices or seeds into a body of a patient to be treated. For example, such seeds are introduced into the lumen of a blood vessel (e.g. to prevent restenosis or for cancer therapy), into the lumen of a body cavity (e.g. to treat prostate cancer) or are placed within the tissue to be treated directly (e.g. to treat breast cancer). All of these applications require the above microscopic dimensions. These dimensions in turn provide for difficulties in testing the weld seam formed to join the metallic parts.

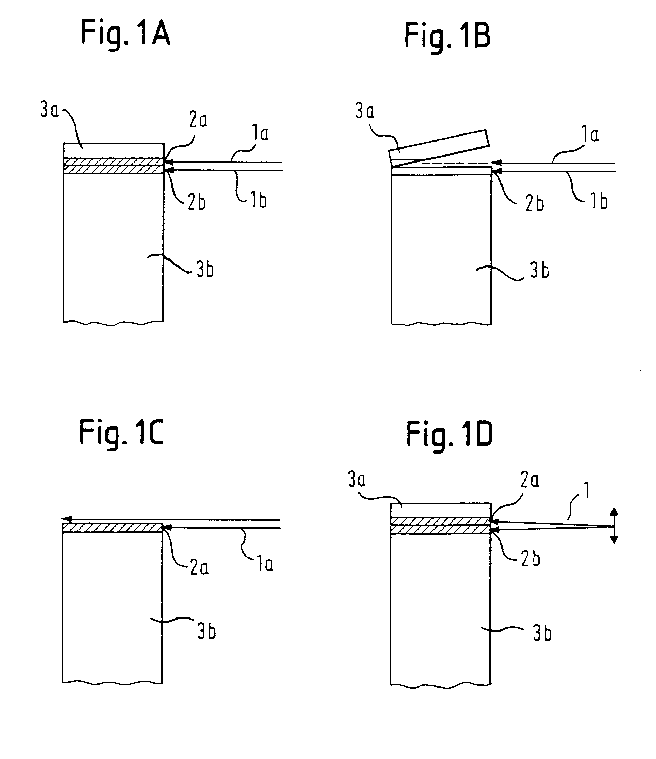

As can be seen from Fig. 1A, the method is carried out by providing two laser beams 1a, 1b and directing the first laser beam 1a on a first predetermined position 2a on the first metallic part 3a and directing the second laser beam 1b on a second predetermined position 2b on the second metallic part 3b and detecting the reflected light of the laser beams along the weld seam. The first and the second predetermined position on the first and second metallic part, respectively, are chosen such that they are located on the weld seam on the respective part, in case of proper welding (Fig. 1A).

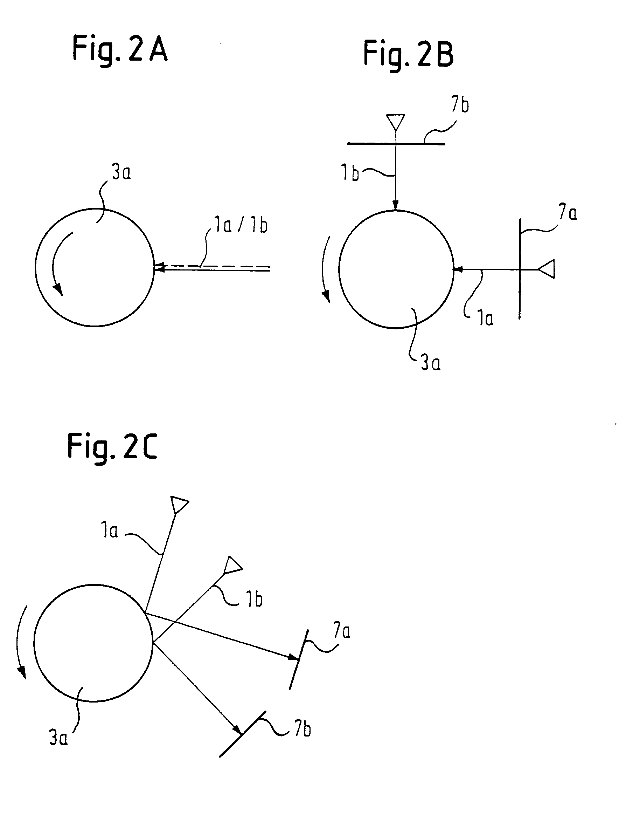

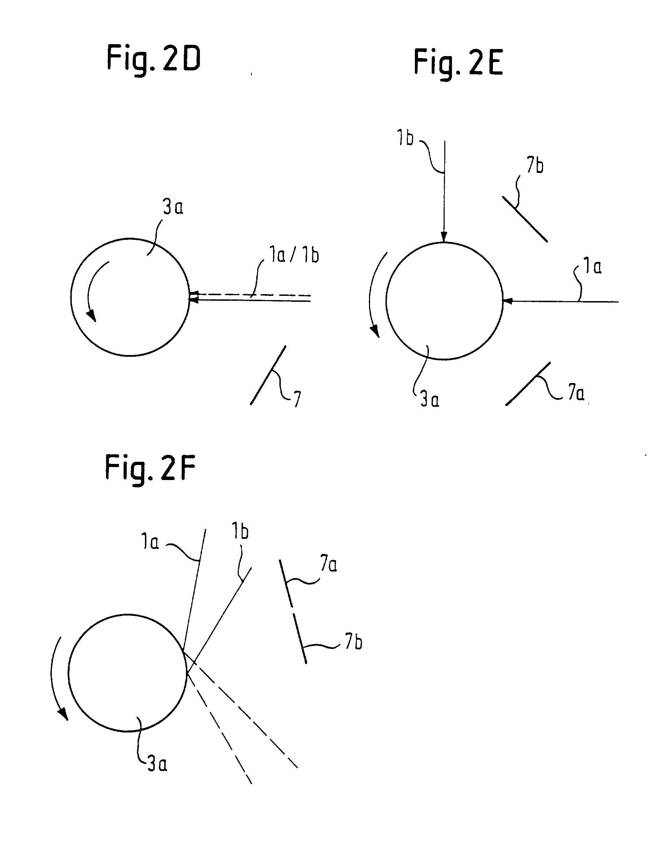

In this case of a proper weld seam being formed, a change in reflected light can be detected for both laser beams. Prior to welding the surface of the metallic parts are relatively rough and thus a scattering of the incident light occurs. In contrast to this, once the weld seam is formed, its surface is smooth. Therefore not scattering occurs, but a focused laser beam is reflected. In other words the weld seam surface may be considered to show higher reflectivity than the surface of the metallic part not bearing such weld seam. Thus in a first embodiment, in case reflected light intensity is detected and the detecting means is/are positioned in the reflected beam(s) to detect the same (Fig. 2A - 2C), this intensity will be higher for reflection on the weld seam than in the absence thereof, i.e. strayed reflection by the surface of the non-welded part. In case the detecting means is/are not positioned in the reflected beam(s), no reflected light (intensity) will be detected from the weld seam surface, since the focused reflected beam is not noticed by the detecting means. In case of the first embodiment when one of the parts is missing (Fig. 1C), reflected light of only one laser beam is detected.

In cases, where one of the parts has broken a part, is distorted or the weld seam is only formed on the other part (Fig. 1B), high reflected light intensity is obtained for one of the laser beams (here 1b), whereas reflected light intensity of the other laser beam (here 1a) is either missing or considerably lower. This is due to the lower reflectivity of the metallic surface of the non-welded part compared to reflectivity of the welded surface as discussed above. Preferably the reflected light is detected by measuring its intensity. Other detection methods are, however, applicable as well and can be implemented by the skilled worker without undue testing.

In case of the second embodiment, when one of the parts has broken apart, is distorted or the seam is formed only on the other part, low scattered light will be detected for the distorted part (1a), whereas no reflected light will be detected from the formed seam (1b).

Due to the spot focusing of the laser, the incident laser beams can be focused on the first predetermined position on the first metallic part and the second predetermined position on the second metallic part, respectively. Upon irradiation only a single spot of the weld seam is tested. To allow for thorough testing of the weld seam (not only a spot thereof), testing is thus carried out along the weld seam, preferably along the entire length of the weld seam by scanning the same. This may be carried out by either moving the weld seam and thus the two metallic parts relative to the laser beams or by moving the laser beam emitting devices relative to and along the weld seam.

In a more preferred embodiment, both laser beam emitting devices and thus the beams are stationary and the weld seam is moved relative to the incident laser beams preferably by rotating the metallic parts. In case of the above container or tube having a rotationally symmetric, preferably circular opening and a cap joined thereto, rotation is carried out along the symmetry axis of the opening. In a more preferred embodiment this symmetry axis parallels the symmetry axis of the entire container or tube and the weld seam is located in a plane orthogonal to this longitudinal symmetry axis of the container or tube which is normal to the weld seam plane.

Rotation may be achieved by any suitable means known to a skilled worker such as a lathe, a rotating disk, an applied magnetic or electric field and so on. By rotating the two metallic parts for 360°, each of the first and the second laser beam irradiates the entire weld seam. Thus, reflected light intensity can be detected along the entire weld seam and completeness of welding can be monitored along its entire length.

As shown in Fig. 2A to 2D, the incident laser beams may be arranged in parallel but also may be tilted with respect to one another. The incident laser beam vectors may be in the plane of the weld seam to be tested, but may also be tilted from this plane. In any case, care must be taken that reflected light of both laser beams is to be detected independently from each other. Preferably both laser beams do not interfere. Interference may, however, also be used to directly obtain a difference or interface signal, then preferably as the only signal measured.

As put forth above with respect to the first and second embodiment the detecting means (7) may be positioned to be within the focused reflected beam (Fig. 2A to 2C) or outside thereof (Fig. 2D to 2F). Although the first embodiment is suitable as well, the second embodiment is preferred due to practical reasons. As the weld seam surface may not be exactly plane, positioning of the detecting means may pose certain obstacles for the first embodiment, whereas no such difficulties are encountered in the second embodiment, where any positioning is suitable as long as it allows for detecting scattered reflected light from the surface of the metallic part prior to welding.

According to another embodiment, there is provided a single scanning laser beam, which scanning laser beam is alternatingly directed on the first and second predetermined position (Fig. 1D) and thereby allows for obtaining reflected light signals from both positions via a single laser beam. The reflected light of both laser beams or the scanning laser beams in both positions may be detected separately (see the above first and second embodiment), but may also preferably be detected by use of the same detecting means. In the latter case a difference signal may be detected. Separate detection with a single detecting means may also be achieved by time resolution of the signal, i.e. the reflected light to be detected.

According to the present invention, every laser beam emitting device known in the art can be used, provided the emitted laser beam is scattered/reflected to a sufficient extend by the metallic parts and the weld seam. The reflected light is then detected by any appropriate detecting means. A laser beam emitting device may comprise one or more lasers operating as continuous wave lasers or pulse lasers: According to a preferred embodiment, wavelength of the laser beams is chosen to maximize the difference in reflectivity (scattering and focused reflection) of the metallic part and the weld seam, respectively. In case of a tuneable laser, a wavelength can be selected at which this difference in intensity of the reflected beam before and after welding is at maximum. The first and second laser beam emitting devices need not necessarily emit identical laser beams, but may emit e.g. laser beams of different wavelength and/or energy. The energy of the emitted laser beam is chosen suitable, to not influence the weld seam to be tested.

Suitable laser beam emitting devices for use in the method of the invention include doped insulator lasers such as the Nd-YAG laser, the Nd-glas laser, the Tisapphire laser or the ruby laser, semiconductor lasers such as the GaAs laser, gas lasers such the He-Ne laser, the noble gas ion lasers or the carbon dioxide laser, diode lasers, and liquid dye lasers. Preferably a diode laser and/or a He-Ne laser is used. An appropriate laser system can be selected by the skilled worker under consideration of the intensity of reflected light before and after welding, commercial availability, availability of detectors and so on. Preferably two different lasers are used which simplifies discrimination of the reflected light. More preferably a diode laser and a He-Ne laser or two He-Ne laser with different wave length or two diode laser with different wave length are used.

In general the weld seam to be tested according to the method of the invention can be obtained by any suitable welding techniques. Preferred is, however, a weld seam obtained by laser welding. In this embodiment the laser beam emitting device used for weld seam testing according to the present method can preferably be identical to the laser beam emitting device used for welding. Nevertheless, during testing operation the energy level of the emitted laser beam is adapted to the testing purpose and is lower than for the welding operation itself. Identity of the laser beam used for welding and testing allows a simplified set-up for the entire operation and also allows for on stage production control in a straight forward manner.

The test method of the invention may not only be used for testing the weld seam after welding, but may also be used to detect positioning and/or presence of both metallic parts prior to welding. For example, the tube and the cap may be positioned by a stopping means prior to welding. In case, one of the parts is missing (see Fig. 1C), scattered reflected light intensity of only one of the laser beams is detected prior to welding.

The method of the invention may also be used not only for testing proper development or existence of the weld seam on both metallic parts to be joined thereby, but may also be used to verify full penetration welding or welding depth along on the weld seam. Therefore, the method of the invention may comprise the additional step of estimating the weld seam depth by measuring the weld seam breath.

According to a rule of thumb, in cases were the focus diameter of the welding laser beam is small compared to the weld seam breadth, which is for example the case with heat conduction welding, typically laser welding, the seam depth corresponds about to half its breadth. Knowing the welding laser's parameter (energy, wave length, focus diameter) and measuring the obtained weld seam's breadth therefore allows to calculate or estimate the depth of the weld seam. Once this is in the same order of magnitude as the thickness of the metallic parts to be joined, full penetration welding is achieved.

Since the weld seam of a container is a potential weak spot forming leaks in the container, establishing full penetration welding along the entirety of the weld seam also allows for testing leaktightness of the weld seam and thus of the container itself. For testing leaktightness full penetration welding is established over the entire length of the seam (e.g. over 360 ° for a circular seam).

In the preferred embodiment of the present invention, which is related to testing of weld seams in very small dimensions, preferably of brachytherapy seeds, their containers and tubes, where the weld seam is provided between the tube and both end caps, the method of the invention allows for straight forward and automated testing of the weld seams along their entire length and further allows for testing leaktightness of these weld seams along the entire length at the same time. Since the laser beams may also be used to detect positioning and/or presence of both metallic parts prior to welding, the method of the invention allows for a straight forward automated quality monitoring during production. This is advantageous not only in that containers bearing misproduced weld seams can easily be discharged prior to adding an insert, but also in that in case of radioactive inserts in the containers, leaking of radioactivity out of the containers can easily be monitored which in turn avoids contamination of entire batches of produced radiation sources or seeds.

Thus, the method of the invention allows on stage testing of each weld seam on the tube or container. This in turn allows to avoid inserting a radioactive insert in a tube not bearing a first end cap or a first not fully fixed end cap and further allows to discharge containers where the second end cap has not been sealingly fixed to leaktight enclose the radioactive insert. All testing can be carried out prior to bringing the possibly defect seed into contact with the batch of produced seeds, thereby preventing possible contamination thereof.

According to the present invention, there is also provided an apparatus for weld seam testing of a laser weld seam joining a metallic container or tube and a metallic cap, said apparatus comprising:
a) two laser beam emitting devices or a scanning laser beam emitting device,
b) a means for positioning of the container or tube and the cap in a position such that the first laser beam is directed on a first predetermined position on the cap and the second laser beam is directed on a second predetermined position on the container or tube or that the scanning laser beam scans the first and the second predetermined position, and optionally a stopping means,
c) a means for moving the container or tube and cap so as to allow for irradiation of the laser beam(s) along weld seam, and
d) a detector for detecting the reflected light of the laser beam(s) along the weld seam.

The laser beam emitting devices and detecting means have been described above. As to the means for positioning this can be any means suitable for stable fixing the tube or container and moving the same into the corrected position for welding and testing. The means for positioning may e.g. be a rotation plate, a split chuck, a jaw chuck, a drill chuck, a clamp, a magnetic means etc.

The means for moving the tube or container is provided to allow for irradiation of the laser beam(s) along the weld seam. Preferably the means for positioning and the means for moving the tube or container are combined in a single means such as the rotation plate, a split chuck, a jaw chuck or a drill chuck.

The apparatus may further optionally comprise a stopping means to improve positioning. This stopping means to improve positioning. This stopping means any suitable device such as a piston, a block, a bar or a plate preventing further movement of the tube or container.

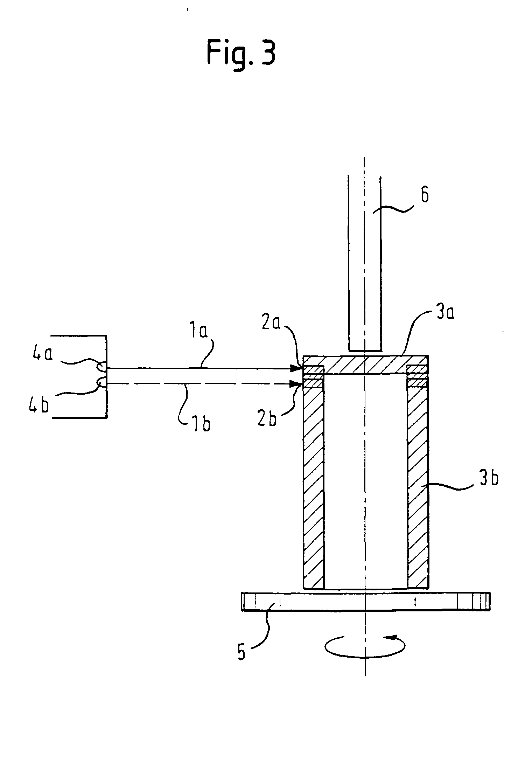

A preferred embodiment of said apparatus is schematically shown in Fig. 3, which figure is not to scale. In Fig. 3 a hollow tube 3b provided with a cap 3a is positioned by a stopping means 6 and a rotation plate 5, which rotation plate serves as a means for positioning but also for moving the weld seam on the container or tube and cap relative to the laser so as to allow for irradiation of the laser beams along this weld seam. Laser beams 1a and 1b irradiate on a first and second predetermined position 2a and 2b, respectively, on the tube 3b and the cap 3a. The weld seam formed between both metallic parts is shown as a shaded area in Fig. 3. Laser beam emitting devices 4a and 4b are provided stationary to emit laser beams 1a and 1b on the predetermined positions 2a and 2b. By means of the rotating plate 5 the tube and the cap are rotated as indicated by an arrow along the symmetry axis of the tube (shown as a doted line).

The scattered and/or reflected light intensity is detected by at least one detector (not shown) along 360° of the weld seam. By the reflected light intensity, (1) proper development of the weld seam and at the same time (2) full penetration welding is ensured as described above. Laser beams 1a and 1b may be replaced by a single scanning laser beam, which scanning laser beam scans over the weld seam. Scanning can either be carried out alternatingly over both positions, e.g. following a sinusoidal or zig-zag line, or by scanning 360° of the first position in the first step and scanning 360° of the second position in a second step.

Following the method of the invention and by use of the apparatus thereof, qualitative and/or quantitative data with respect to the width, length and depth of the weld seam tested can be obtained and may serve to evaluate its quality. Since the data can be obtained in simple straight forward and easily automated fashion, the method of the invention allows for automated quality testing of weld seams especially of weld seams in the microscopic dimension range. The method of the invention is thus very well suited to quality testing of weld seams on small dimensional devices such as radiation sources or seeds for brachytherapy, used to encapsulate radioactive or other possibly hazardous material, quality testing relating to existence and proper positioning of the welded parts, proper development and existence of the seam, and full penetration and leaktightness of the weld seam.

The invention has been illustrated above by reference to preferred embodiments, although this description is not intended to limit the scope thereof, which is scope exclusively defined by the appending claims.

## Claims

1. A method for weld seam testing of a weld seam joining two metallic parts, said method comprising the steps of:
a) providing two laser beams,
b) directing the first laser beam on a first predetermined position on the first metallic part and directing the second laser beam on a second predetermined position on the second metallic part, and
c) detecting the reflected light of the laser beams along the weld seam.

2. The method for weld seam testing of a weld seam joining two metallic parts according to claim 1, said method comprising the steps of:
a) providing a scanning laser beam,
b) directing the scanning laser beam alternatingly on the first and second predetermined position, and
c) detecting the light reflected from both positions along the weld seam.

3. The method of claims 1 or 2 for testing a weld seam wherein the reflected light intensity is detected in step c).

4. The method according to one of claims 1 to 3 for testing a weld seam joining a metallic container or tube to a cap.

5. The method according to one of claims 1 to 4, wherein the reflected light is detected along the entire length of the weld seam.

6. The method according to one of claims 1 to 3, wherein the reflected light intensity is detected along the weld seam by moving, preferably rotating the two metallic parts.

7. The method according to one of claims 4 to 6, wherein the container or tube has a rotationally symmetric, preferably circular, opening and the cap is a plate of the same shape having a diameter matching the outer diameter of the opening walls.

8. The method according to claim 7, wherein the opening is coextensive with the internal cross section of the container or tube in a plane orthogonal to its longitudinal axis.

9. The method according to one of claims 7 or 8, wherein the tube is a hollow cylinder having an outer diameter of 1.5 mm or less, preferably 0.8 mm or less, a wall thickness of 20 to 100 µm, preferably 30 to 100 µm, and having a length of 1.0 to 15.0 mm, preferably 2.0 to 10.0 mm.

10. The method according to one of claims 7 or 8, wherein the container is a hollow cylinder having an outer diameter of 1.5 mm or less, preferably 0.8 mm or less, a wall thickness of 20 to 100 µm, preferably 30 to 100 µm, and having a length of 1.0 to 15.0 mm, preferably 2 to 10 mm, which container is provided on one of the cylinder ends with a cap in form of a flat circular plate having a thickness of 20 to 100 µm, preferably 40 to 60 µm, and a diameter of 1.5 mm or less, which diameter matches the outer diameter of the cylinder.

11. The method according to one of the preceding claims, wherein two different laser emitting devices are used to provide the first and the second laser beam.

12. The method of claim 11, wherein two diode lasers, a diode laser, and a He-Ne laser or two He-Ne laser are used.

13. The method according to one of the preceding claims, wherein the laser beam or beams are used to detect positioning and/or presence of both metallic parts prior to welding.

14. The method of claims 1 to 13, wherein the container or tube and the cap are positioned by a stopping means prior to welding.

15. The method according to one of claims 1 to 14, comprising the additional step of estimating the weld seam depth by measuring breadth of the weld seam.

16. The method of claim 15 for testing leaktightness of the weld seam.

17. Apparatus for weld seam testing of a laser weld seam joining a metallic container or tube and a metallic cap, said apparatus comprising:
a) two laser beam emitting devices or a scanning laser beam emitting device,
b) a means for positioning of the container or tube and the cap in a position such that the first laser beam is directed on a first predetermined position on the cap and the second laser beam is directed on a second predetermined position on the container or tube or that the scanning laser beam scans the first and the second predetermined position, and optionally stopping means,
c) a means for moving the container or tube and cap so as to allow for irradiation of the laser beam(s) along weld seam, and
d) a detector for detecting the reflected light of the laser beam(s) along the weld seam.

18. The apparatus of claim 17, wherein the tube has a rotationally symmetric, preferably circular, opening of 1.5 mm or less outer diameter, said opening being coextensive to the cross section of the container or tube in a plane orthogonal to the container's or tube's longitudinal axis, and wherein the metallic cap has the form of a plate of the same cross section as the opening having the same outer diameter.

19. The apparatus of claim 17 or 18, wherein the means for moving the container or tube and the cap is a means for rotating the container or tube and the cap.

20. The apparatus of claim 19, wherein rotation is effected along the symmetry axis of the cross section of cap and opening for up to 360 °.
